# EUROPEAN PATENT APPLICATION

(11) **EP 4 715 371 A1**
(43) Date of publication of application: **25.03.2026**
(21) Application number: 24202241.6
(22) Date of filing: 24.09.2024
(51) Int. Cl.: G01N 21/65

(54) **DEVICE, METHOD AND APPARATUS FOR PERFORMING NEAR FIELD RAMAN LIGHT SPECTROSCOPY, COMPUTER PROGRAM AND COMPUTER READABLE MEDIUM**

(71) Applicant: Universität Graz, 8010 Graz (AT)
(72) Inventor: Enenkel, Jan, 8101 Gratkorn (AT); Banzer, Peter, 8010 Graz (AT); Jost, Max, 8010 Graz (AT)
(74) Representative: Neuhold, Alfred

(57) **Abstract**

The invention discloses a device 20 for performing near field Raman spectroscopy comprising a light beam confinement unit 21 for forming a focal field of a transmitted incident light 23, and a sample stage 30 for providing a test sample 32, which is analysable with the incident light 22 passing through said light beam confinement unit 21, wherein said sample stage 30 is designed to move in at least two spatial directions. A spherical near field source device 25 is arranged between said light beam confinement unit 21 and said sample stage 30, wherein said spherical near field source device 25 is arranged in a focal field of said light beam confinement unit 21 for providing a near field into the test sample 32. Furthermore, the invention discloses a method for investigating a test sample with near field Raman light, a computer program, a computer-readable medium and an apparatus for performing Raman spectroscopy.

## Description

The present invention relates to a device for performing near field Raman light spectroscopy according to claim 1, a method for investigating a test sample with near field Raman light according to claim 8, a computer program according to claim 12, a computer-readable medium according to claim 13 and an apparatus for performing Raman light spectroscopy according to claim 14.

### Technical field of the Invention

The system design of modern Raman light spectroscopy systems has usually a strong emphasis on high spatial resolution and high signal-to-noise ratios. Fulfilling these features, it is possible to detect small structures or weak signal strength. But one fundamental aspect of such spectroscopic measurement techniques has been left mostly unattended, i.e., full polarization control in excitation and detection of Raman scattering from nanoscopic structures.

### Background of the Invention

Typically, near-field Raman imaging is an exceptional microscopy technique which links Raman information (chemical, stress or strain information) to high-resolution Scanning Near-field Optical Microscopy (SNOM). Thus near-field Raman allows for the acquisition of complete high-resolution confocal Raman images. Typically, lateral resolutions of below 100 nm can be achieved. The excitation laser light is focused through a SNOM-tip resulting in a "near-field" (evanescent field). While the sample is moved on a scan stage, the transmitted light is spectroscopically detected point-by-point and line-by-line in order to generate a hyperspectral Raman image. Using a beam deflection setup, it is ensured that the probe can be in contact with the sample. In addition, the topography can be recorded simultaneously to the measurement.

A publication from Young Chai Cho & Sung II Ahn (Scientific Reports Volume 10, Article number: 11692 (2020), "Fabricating a Raman spectrometer using an optical pickup unit and pulsed power"), discloses an optical pickup unit (OPU)-based Raman spectrometer, which is fabricated with 3D printer-made components, a Raman edge filter and a laser diode with a wavelength of 520 nm as light source. A function generator was used as a pulsed power source to analyse the characteristics of the OPU Raman spectrometer according to various frequencies and duty ratios. When using a pulsed DC power supply, the laser wavelength tended to move to a longer wavelength with increases in duty ratios.

The disadvantage of those devices is, that there is no polarisation control in the near field region.

WO 2002068919 A1 discloses a tip enhanced Raman measurement apparatus. A laser beam is focused to a small spot size onto a sample. A silver coated metal probe has its tip positioned within the beam, either close to or directly with the sample. A reflected Raman signal is detected. The metal probe enhances the Raman signal and provides high resolution. It may be cantilevered, and scanned across the surface of the sample, with its position monitored via optical means.

The disadvantage of this apparatus is, that the apparatus must comprise a metal probe, and a laser beam is necessary for alignment of the metal probe to perform the Raman measurement.

### Summary of the Invention

An object of the present invention is to overcome at least one disadvantage of the prior art. It is further an object of the present invention to provide an enhanced device for performing spectroscopy for providing a near field into the test sample, which preferably allows full polarization control in excitation and detection of Raman light scattering from nanoscopic structures.

At least one of these objects has been solved by the features of the independent patent claims. Other preferred embodiments are indicated in the dependent claims.

According to a first aspect of the present invention, a device for performing near field Raman light spectroscopy is provided, which comprises a light beam confinement unit for forming a focal field of a transmitted incident light and a sample stage for providing a test sample, which is analysable with the incident light passing through said light beam confinement unit, wherein said sample stage is designed to move in at least two spatial directions. A spherical near field source device is arranged between said light beam confinement unit and said sample stage, wherein said spherical near field source device is arranged in a focal field of said light beam confinement unit for providing a near field into the test sample.

Using this device, it is possible to detect even smaller structures or weaker signal strength, even down to the single molecule level. The device allows full polarization control in excitation and detection of Raman light scattering from nanoscopic structures. Thus, a fundamental aspect of such spectroscopic measurement techniques can be controlled by the device disclosed herein. Its main advantage is the improvement of the information content and data quality on a technical as well as commercial level.

Said light beam confinement unit could be embodied as a commercially available microscope objective with high numerical aperture between 0.6 and 0.95, preferably 0.9. The magnification of said microscope objective may vary between 40 and 400. The light beam confinement unit will be able to form certain focal fields that are applied towards said spherical near field source device, like nanoparticles.

As said spherical near field source device can be placed in the centre of the focal field, or the desired position of the focal field, the test sample itself can be brought closer to said spherical near field source device by the sample stage. As said spherical near field source device can be placed with intent in the central axis, modes inside said spherical near field source device can be generated, that could be used for measurement purposes on the test sample.

Due to the structure of the transmitted incident light beam that does form a certain focal field, the spherical near field source device will be oscillating. Depending on the several parameters like, size, material of the spherical near field source device or the wavelength and focal field, different dipole or multipole oscillations can appear inside said spherical near field source device generating strong and confined near fields in the test sample.

Said spherical near field source device allows symmetric near field enhancement on a test sample. Said near field source device can be embodied by a symmetric particle.

Thus, a high control of polarization can be assumed using full intensity of the transmitted incident light beam. As there is no AFM-like tip, no light intensity is lost at the cantilever structure which is present in certain AFM configurations known from the state of the art.

The tailored focal-field towards said near field source device will result in an even more confined and enhanced near-field that will enhance Raman light scattering within the test sample. The enhanced Raman light then can be collected via said near field source device and be converted back into the far-field. The enhanced Raman light is then collected by an optical collection system, preferably embodied in said beam confinement unit, which then will be processed by an analysing unit.

In a preferred embodiment said spherical near field source device is arranged on a transparent device holder. Thus, the handling of said near field source device in the focal field of said light beam confinement unit is improved and a more accurate positioning of said spherical near field source device is possible. Said light transparent device holder can be symmetric towards the focal field, homogeneous and isotropic in refractive index.

As said spherical near field source device can be placed with intent slightly off the central axis also additional modes inside said spherical near field source device can be generated that could be used for measurement purposes on the test sample. Said test sample will interact with said additional modes and may send a signal back to said spherical near field source device. This signal is detected and analysed. Thus, anisotropic Raman light measurements are possible in both transverse and longitudinal modes.

Said transparent device holder may comprise glass or is preferably a glass sheet, which is a low refractive index material, ensuring that most light energy is propagated towards said spherical near field source device. Furthermore, said transparent device holder may comprise a transparent polymer, like plexiglass (PMMA), or Indium Tin Oxide (ITO), or quartz like materials. Those materials are easy to process and said spherical near field source device can be placed in an accurate way on those materials.

In a preferred embodiment said transparent device holder is arranged on a moveable device holder stage which is designed to move at least in two spatial directions for shifting said spherical near field source device within the focal field. Thus, the positioning of said spherical near field source device is reproduceable. Said positioning of said spherical near field source device slightly off the central axis is performed more accurately. Said transparent device holder may be moved in x-, y, and z-direction relative to said light beam confinement unit.

In a preferred embodiment said spherical near field source device is a resonant structure. Thus, a high control of polarization can be assumed allowing for different near-fields that can be controlled transversely as well as longitudinally. In particular, said spherical near field source device is a plasmonic structure. Said spherical near field source device could be embodied by a metallic or dielectric nanoparticle like gold, silver, silicon or other resonant materials. Said spherical near field source device could be embodied by a more complex structure, where properties of said spherical near field source device influence the resonance behaviour. These properties would be defined by, for example, Mie coefficients, geometrical diameter, symmetry of the particle, surface layers, refractive index of environment, etc. As possible embodiment, a spherical gold or silicon nanoparticle with a diameter of 50nm to 400nm could be used, using an incident light source with a wavelength of 532nm, for example a laser light source. Preferably said laser light source emits a narrow band beam. Another wavelength of said incident light source could be 633nm. Thus, a wavelength comparable with a scattering resonance of said spherical near field source device would be advantageable. As said spherical near field source device can be embodied by a symmetric particle, a high control of polarization can be assumed allowing for different near-fields that can be controlled transversely as well as longitudinally.

In a preferred embodiment an optical feedback arrangement is provided, comprising at least one sensor for arranging said spherical near field source device in the focal field. For example, said sensor may detect the signal intensity generated by said spherical near field source device and said spherical near field source device is moved relative to said beam confinement unit to maximize the signal intensity. Said sensor may be an optical sensor, for example a camera or a photodiode, for enhanced control of the position of said spherical near field source device.

As the device comprises said sensor, focusing and positioning of said spherical near field source device into the focal spot can be performed purely optically, requiring no expensive feedback mechanism of the device holder stage. Hence, it does not require any absolute position accuracy. This fact offers the remarkable opportunity to simplify the device holder stage in terms of cost and size.

In a preferred embodiment an evaluation unit is provided for analysing Raman light emitted from said test sample. Thus, enhanced Raman light measurements may be performed reproducibly. As the evaluation unit can also analyse signals from Raman light scattering, the near field focusing of said spherical near field source device towards the test sample can be performed by reflection or by Raman light scattering, even at a different wavelength. As embodiment several measurement methods are possible including measurement of beam diameter using the optical feedback arrangement, measurement of beam intensity over z-direction, by moving z of the sample stage, or Raman light intensity scan over z-direction of the sample stage.

In a preferred embodiment a processing unit is provided, at least for controlling an incident light into said light beam confinement unit. The regulation of the position of said spherical near field source device inside the focal field can be performed by a signal of the sensor provided to the processing unit or to the evaluation unit. A positioning-control loop can be performed in regular reflection, using incident light beam. The processing unit is preferably responsible for scanning the test sample close to of said spherical near field source device, while protecting it from crashing into the test sample. The processing unit may be furthermore responsible for switching different modes of the polarization influencing elements.

It is most likely that fluorescence effects or photoluminescence effects or such experiments with said device using said spherical near field source device can also be investigated. As this device allows for precise control of the excitation polarization and corresponding measurement in elastically or inelastically scattered light measured in reflection, it establishes the possibility to measure the Raman light anisotropy of the test sample on a small length-scales. This is possible as said spherical near field source device is symmetric and therefore the dipole (or even multipoles) of said spherical near field source device can be switched between longitudinal and transversal orientation depending on the focal field orientation.

According to a further aspect of the present invention, a method for investigating a test sample with near field Raman light comprising:
- emitting an incident light into a light beam confinement unit,
- arranging a spherical near field source device in the focal field of said light beam confinement unit,
- arranging a sample stage with a test sample in direction to said spherical near field source device for providing a near field into the test sample,
- measuring at least a Raman light, emitted from said near field of said test sample.

Using this method, it is possible to detect even smaller structures or weaker signal strength, even down to the single molecule level. The method allows full polarization control in excitation and detection of Raman light scattering from nanoscopic structures. Thus, a fundamental aspect of such spectroscopic measurement techniques can be controlled by the device disclosed herein. Its main is the improvement of the information content and data quality on a technical as well as commercial level. Said spherical near field source device performs like a sensor to enhance inelastic Raman light scattering and allows full polarization control to measure materials and material properties on a nanoscopic level.

In a preferred embodiment said spherical near field source device is moved in said focal field of said light beam confinement unit for exiting at least one Raman mode in said test sample. As said spherical near field source device can be placed with intent slightly off the central axis also additional Raman modes inside said spherical near field source device can be generated that could be used for measurement purposes on the test. Thus, a to further increase of the range of polarization measurement capabilities is possible.

As this method allows for precise control of the excitation polarization and corresponding measurement in elastically or inelastically scattered light measured in reflection, it establishes the possibility to measure the Raman light anisotropy of the test sample on a small length-scales. This is possible as said spherical near field source device is symmetric and therefore the dipole (or even multipoles) of said spherical near field source device can be switched between longitudinal and transvers orientation depending on the focal field orientation.

In a preferred embodiment said movement of said spherical near field source device is monitored by at least one optical feedback system. Said at least one optical feedback system may detect the signal intensity generated by said spherical near field source device and said spherical near field source device is moved relative to said beam confinement unit to maximize the signal intensity.

In a preferred embodiment said test sample is moved in at least two spatial directions for measuring Raman light on different regions of the test sample. Thus, a large test sample with several structures may be scanned. Changing the test sample is not necessary. Said sample stage comprising the test sample may be moved in x-, y, and z-direction relative to said light beam confinement unit.

According to a further aspect of the present invention, a computer program comprising instructions which, when the program is executed by a computer, cause the computer to carry out the method disclosed herein. Thus, the complex measurement scenario is performed automatically. Even for large test samples, investigation of a specific area in the test sample can be performed several times automatically. Finding specific areas on a large test sample is a challenge, without such a computer program. A computer could be also an Arduino, or Minicomputer.

According to a further aspect of the present invention, a computer-readable medium comprising instructions which, when executed by a computer, cause the computer to carry out the method disclosed herein. Said computer-readable medium may comprise the computer program as well as important calibration data for calibrating the device disclosed herein. Comprising all the information on a computer-readable medium supports the user of said device.

According to a further aspect of the present invention, a device holder stage is disclosed, which is designed to move at least in two spatial directions for shifting a spherical near field source device arranged on a transparent device holder within the focal field of a light beam confinement unit. Said device holder stage may be part of a set with a beam confinement unit or may be purchased separately. Said device holder stage may comprise at least one fixation unit for reproducibly positioning the device holder stage to a beam confirmation unit.

Preferably said device holder stage may comprise a pure levitation system using integrated coils. Thus, no springs, or no mechanical connections to the spherical near field source device, are necessary. The movement of said spherical near field source device is performed continuously, without interruptions. Thus, a resonant frequence of the stage is easily changeable.

According to a further aspect of the present invention, an apparatus for performing Raman light spectroscopy is disclosed, which comprises a light generation unit for emitting a light, preferable a laser beam, at least one optical component for manipulating said light and forming an incident light, a light beam confinement unit for transmitting said incident light, a sample stage for providing a test sample, which is analysable with the incident light from the light beam confinement unit, wherein said sample stage is designed to move in at least two spatial directions, a spherical near field source device is arranged between said light beam confinement unit and said sample stage, wherein said spherical near field source device is arranged in a focal field of said light beam confinement unit for providing a near field into the test sample and an analysing unit for analysing said Raman light emitted from said test sample.

As this apparatus allows for precise control of the excitation polarization and corresponding measurement in elastically or inelastically scattered light measured in reflection, it establishes the possibility to measure the Raman light anisotropy of the test sample on a small length-scales. This is possible as said spherical near field source device is symmetric and therefore the dipole (or even multipoles) of said spherical near field source device can be switched between longitudinal and transvers orientation depending on the focal field orientation, especially by changing the ratio of longitudinal and transvers orientation.

In a preferred embodiment a processing unit is provided, wherein said processing unit is designed to control at least said sample stage. Its purpose is to control, regulate or set the different disclosed units into different states. These controls are necessary to switch to a certain mode, adjust the position of said spherical near field source device or to move the test sample. The processing unit could be embodied by a personal computer, or any other type of controlling unit.

The analysing unit may be responsible for analysis of the received signal from said spherical near field source device. This unit can contain several polarization influencing components, embodied for example by linear polarizers or, wave plates, which could be rotatable, or also using liquid crystal polarizing elements. After the incident light has been manipulated with respect to its polarization, it can be measured by different elements, which could be embodied by photodiode, camera and spectrometer with a sensitive detector. With this configuration of detection elements, combined with polarization influencing components, a full Stokes measurement is possible in reflection (Rayleigh light scattering) and or even in Raman light scattering. Preferably said processing unit is designed to control at least said analysing unit. The control is necessary to analyse a certain mode.

The light generation unit may be responsible to generate a specific spatial and, alternatively or supplementary, polarization-tailored incident light mode, for example a laser light mode. Preferably, this unit comprises a monochromatic and coherent light source. This light source could be embodied as a laser emitting a laser beam. Following by an optional filter that could be embodied by a laser line filter. The laser beam then could be directed by several mirrors to towards several polarization influencing elements. The polarization influencing elements can be controlled in certain embodiments either electrically, via magnetic fields or mechanically, by rotation or via mechanical pressure to generate different types of beam polarizations. To name a few, this could be radially polarized beam (RPB), azimuthal polarized beam (APB), Gaussian beam with controllable polarization (Gauss), counter rotating radially polarized beam (CRPB) or counter rotating azimuthal polarized beam (CAPB). The elements for influencing the polarization can be embodied by linear polarizers, liquid crystal variable retarders, liquid crystal beam shapers (e.g., q- or s-plates) or wave plates with different rotation angles. Behind the polarization influencing elements, an optional element could be placed to optimize the modal quality and purity, which could be embodied by a pinhole filter or Fourier filter. After this optional element, another optional element could be placed to direct the backscattered light from the objective to the analysing unit. One possible embodiment could be a beam splitter or spectrally selective mirror system. Preferably said processing unit is designed to control at least said light generation unit. The control is necessary to generate a certain mode.

Alternative or supplementary said processing unit is designed to control at least said device holder stage comprising said spherical near field source device is provided.

Thus, the handling of said near field source device in the focal field of said light beam confinement unit is improved and a more accurate positioning of said spherical near field source device is possible.

By means of the following figures, the invention is explained in more detail by means of examples of embodiments. The list of references is part of the disclosure.

Positional indications, such as "above", "below", "right" or "left" are in each case related to the corresponding embodiments and are not to be understood as restrictive.

Indications, such as "first", "second", or "further" are in each case related to the corresponding device and are not to be understood as restrictive or enumeration.

### Brief Description of the Drawings

In order to facilitate better understanding of the present invention, reference is made below to the drawings. These show only exemplary embodiments of the subject matter of the invention. These embodiments, offered not to limit but only to exemplify and teach the invention, are shown and described in sufficient detail to enable those skilled in the art to implement or practice the invention. Thus, where appropriate to avoid obscuring the invention, the description may omit certain information known to those of skill in the art.

In the figures and the associated description, identical or functionally analogous parts are provided with the same reference numerals.

The invention also encompasses individual features shown in the figures, even if they are shown there in connection with other features and/or are not mentioned above.

Further, the term "comprising" and derivatives thereof do not exclude other elements or steps. Likewise, the indefinite article "a" or "one" and derivatives thereof do not exclude a plurality. The functions of multiple features recited in the claims may be performed by a single unit. The terms "substantially", "approximately", "about" and the like in connection with a characteristic or a value define, in particular, also exactly the characteristic or exactly the value. All reference signs in the claims are not to be understood as limiting the scope of the claims.
Fig. 1: shows the inventive device for performing near field Raman light spectroscopy in a schematic view,
Fig. 2: shows a movement of a spherical near field source device within the focal field of a radially polarized beam within a device according to Fig.1,
Fig. 3: shows the x-direction of the electric field orientations of a radially polarized beam according to Fig. 2,
Fig. 4: shows the y-direction of the electric field orientations of the radially polarized beam according to Fig. 2,
Fig. 5: shows the z-direction of the electric field orientations of the radially polarized beam according to Fig. 2,
Fig. 6: shows a near-field simulation of a spherical near field source device within a focal field in x- direction, placed on the optical axis of a tightly focused x-polarized Gaussian beam,
Fig. 7: shows a near-field simulation of a spherical near field source device within a focal field in z- direction, placed on the optical axis of a tightly focused x-polarized Gaussian beam,
Fig. 8: shows an inventive device holder stage of the device according to Fig. 1 in a schematic view,
Fig. 9: shows an inventive apparatus comprising the device according to Fig. 1 in a schematic view, and
Fig. 10: shows a logic diagram of the processing unit, the device according to Fig. 1, the analysing unit, the light generation unit according to Fig. 9.

### Detailed Description

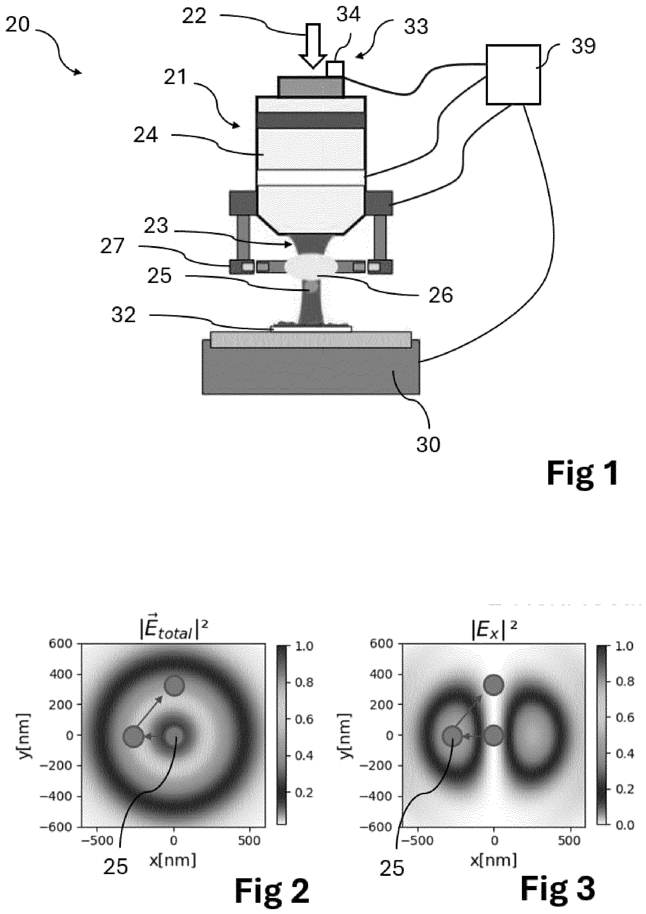

**Figure 1** shows a device 20 for performing near field Raman light spectroscopy, which comprises a light beam confinement unit 21 for forming a focal field of a transmitted incident light 23 and a sample stage 30 for providing a test sample 32. Said test sample 32 is analysable with the incident light 22 passing through said light beam confinement unit 21, and said sample stage 30 is designed to move the test sample 32 in three spatial directions. Said light beam confinement unit 21 comprises a microscope objective 24 with high numerical aperture.

A spherical near field source device 25 is arranged on a glass holder 26 between said light beam confinement unit 21 and said sample stage 30. Said spherical near field source device 25 is arranged in the focal field of said light beam confinement unit 21 for providing a near field into the test sample 32. The glass holder 26 is arranged on a moveable device holder stage 27, which is designed to move in three spatial directions for shifting said spherical near field source device 25 within the focal field.

Said near field source device 25 is a symmetric particle. Due to the structure of the transmitted incident light beam 23, that does form a certain focal field, the spherical near field source device 25 will be oscillating. Depending on the several parameters like, size, material of the spherical near field source device 25 or the wavelength and focal field of the incident light 22, different dipole or multipole oscillations can appear inside said spherical near field source device 25 generating strong and confined near fields.

Said device 20 comprises an optical feedback arrangement 33, comprising a camera 34 for arranging said spherical near field source device 25 in the focal field. The camera 34 detects the signal intensity generated by said spherical near field source device 25 and said spherical near field source device 25 is moved relative to said beam confinement unit 21 to maximize the signal intensity.

Furthermore, an evaluation unit 39 is provided for analysing Raman light emitted from said test sample 32. Said evaluation unit 39 is connected to said camera 34, to said beam confinement unit 21 and to said moveable device holder stage 27. Said evaluation unit 39 comprises a control unit and a computer to control the said camera 34, said beam confinement unit 21 and said moveable device holder stage 27 as well as said sample stage 30.

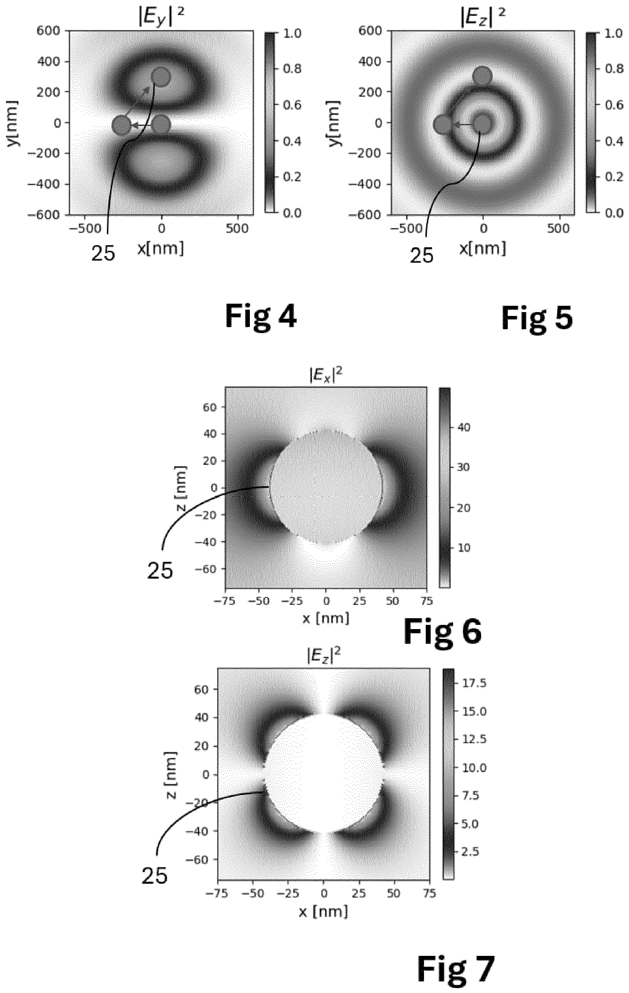

As possible embodiment, a spherical gold nanoparticle with a diameter of 80nm is used as said spherical near field source device 25, using an incident light 22 with a wavelength of 532nm, for example a laser light source. **Figure 2** to **Figure 5** show a possible measurement scenario for the device according to **Figure 1****,** which illustrates numerically calculated focal fields of a radially polarized beam. As simulation parameters, an objective 24 with magnification of 100 and a numerical aperture (NA) of 0.9 was chosen. Depending on the spatial position of the spherical gold nanoparticle inside the focal field, different electric field orientations dominate. When moving the spherical gold nanoparticle through this field also the plasmonic dipole orientation will align with the dominating electric field. As example, the spherical gold nanoparticle could be placed in the centre of the focal field to excite a longitudinal z-oriented plasmonic oscillation, where its nearfield can be used to excite Raman modes within a specimen to be measured. When moving the spherical gold nanoparticle half a wavelength in the x-direction, a transverse x-oriented plasmonic oscillation will manifest, with its x-polarized nearfield to be used to measure the specimen - see shifted circle in the **Figure 2** to **Figure 5****.** Alternatively, a spherical silicon nanoparticle with a diameter of 220nm could be used.

To demonstrate how to the spherical gold nanoparticle can be employed as nearfield sensor we show numerically calculated near-fields in Fehler! Verweisquelle konnte nicht gefunden werden.. Simulations were performed using an 80nm gold particle that was excited with an x-polarized Gaussian beam. As seen in the x-component of the electric field, there is a strong near-field in the x-direction outside of the gold nanoparticle. This strong nearfield can be used to excite Raman modes within a specimen placed in close vicinity. For simplification purposes, the refractive index of the specimen was neglected here.

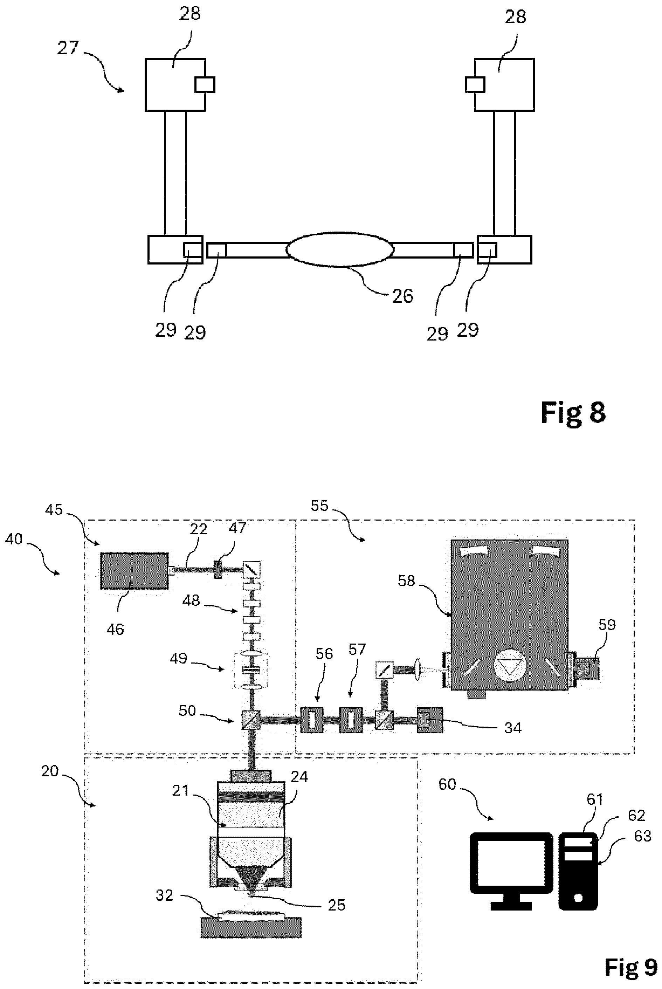

**Figure 8** shows said device holder stage 27, which is designed to move in three spatial directions for shifting said spherical near field source device 25 arranged on the transparent device holder 26 within the focal field of a light beam confinement unit 21, as shown in **Figure 2** to **Figure 5****.** Said device holder stage 27 comprises a fixation unit 28 for reproducibly positioning the device holder stage 27 to a beam confirmation unit 21. Said device holder stage 27 comprises a pure levitation system using integrated coils 29. Thus, no springs or mechanical connection are necessary.

**Figure 9** shows an inventive apparatus 40 for performing Raman light spectroscopy comprising said device 20 according to **Figure 1****.** Furthermore, the apparatus 40 comprises a light generation unit 45 for emitting a light, preferable a laser beam, several optical components for manipulating said light and forming an incident light 22, and an analysing unit 55 for analysing said Raman light emitted from said test sample 32.

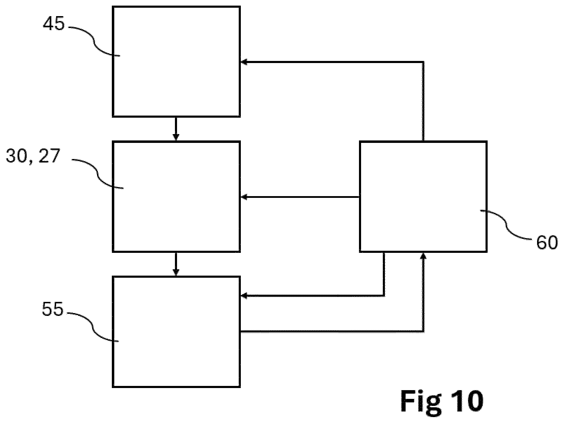

In addition, a processing unit 60 is provided, wherein said processing unit 60 is designed to control said sample stage 30. Its purpose is to control, regulate or set the different disclosed units into different states as shown in **Figure 10****.** The processing unit 60 comprises a personal computer 61. The personal computer 61 is hosting a computer program 62, comprising instructions which, when the program is executed by the personal computer 62, cause the personal computer 62 to carry out the method disclosed herein. Furthermore at least one computer-readable medium 63 is provided comprising instructions which, when executed by said personal computer 62, cause the personal computer 62 to carry out the method disclosed herein.

The analysing unit 55 is responsible for analysing the received signals from said spherical near field source device 25. This unit can contain several polarization influencing components, embodied for example by linear polarizers 56 and wave plates 57, which could be rotatable, or also using liquid crystal polarizing elements. After the incident light has been manipulated with respect to its polarization, it can be manipulated by a monochromator 58 and it is measured by different elements 59, which could be embodied by photodiode, camera and spectrometer with a sensitive detector. With this configuration of detection elements 59, combined with polarization influencing components, a full Stokes measurement is possible in reflection (Rayleigh light scattering) and or even in Raman light scattering. Said processing unit 60 is designed to control at least said analysing unit 55.

The light generation unit 45 is responsible to generate a specific spatial and, alternatively or supplementary, polarization-tailored incident light mode, for example a laser light mode. The light generation unit 45 comprises a monochromatic and coherent light source 46. This light source 46 is a laser emitting a laser beam 22. Following by a laser line filter 47. The laser beam then is directed by several mirrors to towards several polarization influencing elements 48. The polarization influencing elements 48 are controlled electrically. The elements 48 for influencing the polarization can be embodied by linear polarizers, liquid crystal variable retarders, liquid crystal beam shapers (e.g., q- or s-plates) or wave plates with different rotation angles. Behind the polarization influencing elements 48, a Fourier filter 49 is placed to optimize the modal quality and purity. After the Fourier filter 49 a beam splitter 50 is placed to direct the backscattered light from the test sample 32 to the analysing unit 55.

Said processing unit 60 controls the incident light 22 into said light beam confinement unit 21. The regulation of the position of said spherical near field source device 25 inside the focal field can be performed by the camera 34 and the analysing unit 55 or the evaluation unit 39. A positioning-control loop can be performed in regular reflection, using incident light beam 22. The processing unit 60 is responsible for scanning the test sample 32 close to of said spherical near field source device 25.

A method for investigating a test sample 32 with near field Raman light comprising at least the following steps:
- emitting an incident light 22 into a light beam confinement unit 21,
- arranging a spherical near field source device 25 in the focal field of said light beam confinement unit 21,
- arranging a sample stage 30 with a test sample 32 in direction to said spherical near field source device 25 for providing a near field into the test sample 32,
- measuring at least a Raman light, emitted from said near field of said test sample 32.

### Reference List

- 20: device
- 21: light beam confinement unit
- 22: incident light
- 23: transmitted incident light
- 24: microscope objective
- 25: spherical near field source device
- 26: transparent device holder
- 27: device holder stage
- 28: fixation unit
- 29: coils
- 30: sample stage
- 32: test sample
- 33: optical feedback arrangement
- 34: camera
- 39: evaluation unit
- 40: apparatus
- 45: light generation unit
- 46: light source
- 47: laser line filter
- 48: polarization influencing elements
- 49: Fourier filter
- 50: beam splitter
- 55: analysing unit
- 56: linear polarizers
- 57: wave plate
- 58: monochromator
- 59: detector
- 60: processing unit
- 61: personal computer
- 62: computer program
- 63: computer-readable medium

## Claims

1. A device (20) for performing near field Raman spectroscopy comprising a light beam confinement unit (21) for forming a focal field of a transmitted incident light (23) and a sample stage (30) for providing a test sample (32), which is analysable with the incident light (22) passing through said light beam confinement unit (21), wherein said sample stage (30) is designed to move in at least two spatial directions, **characterized in that** a spherical near field source device (25) is arranged between said light beam confinement unit (21) and said sample stage (30), wherein said spherical near field source device (25) is arranged in a focal field of said light beam confinement unit (21) for providing a near field into the test sample (32).

2. The device according to claim 1, **characterized in that,** said spherical near field source device (25) is arranged on a transparent device holder (26), and preferably said transparent device holder (26) is arranged on a moveable device holder stage (27) which is designed to move at least in two spatial directions for shifting said spherical near field source device (25) within the focal field.

3. The device according to claim 1 or 2, **characterized in that,** said spherical near field source device (25) is a resonant structure.

4. The device according to any of the previous claims, **characterized in that,** an optical feedback arrangement (33) is provided, comprising at least one sensor for arranging said spherical near field source device (25) in the focal field.

5. The device according to any of the previous claims, **characterized in that,** an evaluation unit (39) is provided for analysing Raman light emitted from said test sample (32).

6. The device according to any of the previous claims, **characterized in that,** a processing unit (60) is provided, at least for controlling an incident light (22) into said light beam confinement unit (21).

7. A method for investigating a test sample (32) with near field Raman light comprising:
- emitting an incident light (22) into a light beam confinement unit (21),
- arranging a spherical near field source device (25) in the focal field of said light beam confinement unit (21),
- arranging a sample stage (30) with a test sample (32) in direction to said spherical near field source device (25) for providing a near field into the test sample (32),
- measuring at least a Raman light, emitted from said near field of said test sample (32).

8. The method according to claim 7, **characterized in that,** said spherical near field source device (25) is moved in said focal field of said light beam confinement unit (21) for exiting at least one Raman mode in said test sample (32).

9. The method according to claim 8, **characterized in that,** said movement of said spherical near field source device (25) is monitored by at least one optical feedback system (33).

10. The method according to any of the claims 7 to 9, **characterized in that,** said test sample (32) is moved in at least two spatial directions for measuring Raman light on different regions of the test sample (32).

11. A computer program (62) comprising instructions which, when the program is executed by a computer (61), cause the computer (61) to carry out the method of one of the claims 7 to 10.

12. A computer-readable medium (63) comprising instructions which, when executed by a computer (61), cause the computer (61) to carry out the method of one of the claims 7 to 10.

13. A device holder stage (27), which is designed to move at least in two spatial directions for shifting a spherical near field source device (25) arranged on a transparent device holder (26) within the focal field of a light beam confinement unit (21).

14. An apparatus (40) for performing Raman spectroscopy comprising:
- a light generation unit (45) for emitting a light, preferable a laser beam
- at least one optical component for manipulating said light and forming an incident light (22),
- a light beam confinement unit (21) for transmitting said incident light (22),
- a sample stage (30) for providing a test sample (30), which is analysable with the incident light (22) from the light beam confinement unit (21), wherein said sample stage (30) is designed to move in at least two spatial directions,
- a spherical near field source device (25) is arranged between said light beam confinement unit (21) and said sample stage (30), wherein said spherical near field source device (25) is arranged in a focal field of said light beam confinement unit (21) for providing a near field into the test sample (32).
- an analysing unit (55) for analysing said Raman light emitted from said test sample (32).

15. The apparatus according to claim 14, **characterized in that,** a processing unit (60) is provided, wherein said processing unit (60) is designed to control at least said sample stage (30) and/or at least said analysing unit (55) and/or at least said light generation unit (45) and/or at least at least device holder stage (27) comprising said spherical near field source device (25).
